# EUROPÄISCHE PATENTANMELDUNG

(11) **EP 2 277 670 A2**
(43) Veröffentlichungstag der Anmeldung: **26.01.2011**
(21) Anmeldenummer: 10170518.4
(22) Anmeldetag: 22.07.2010
(51) Int. Cl.: B25G 1/10, E04F 21/16, B23D 71/04

(54) **Vorrichtung zum Säubern der Seitenkanten von Schaltafeln und Kanthölzern und Verfahren zur Herstellung einer derartigen Vorrichtung**

(30) Priorität: 22.07.2009 CH 11492009
(71) Anmelder: Wild, Max, 8854 Siebnen (CH)
(72) Erfinder: Wild, Max, 8854 Siebnen (CH)
(74) Vertreter: Hasler, Erich

(57) **Zusammenfassung**

Die Erfindung betrifft eine Vorrichtung (11) zum Säubern von Seitenkanten von Schaltafeln, Kanthölzern, H-Trägern u. ä. insbesondere von anhaftenden Betonresten. An einem Rahmen sind eine Mehrzahl von Zähnen (21) hintereinander angeordnet. Am Rahmen sind Führungselemente vorgesehen, welche die Zähne (21) um eine bestimmte Distanz überragen. Die Erfindung betrifft auch eine Vorrichtung (35) zum Halten und Verschwenken von einer von Betonresten zu reinigenden Schaltafel, Kanthölzern, H-Trägern u. ä. Ein Support (39) ist an einer Konsole (46) derartig verschwenkbar angeordnet, dass der Support (39) aus einer ersten vertikalen Position um 180 Grad in eine zweite vertikale Position um eine horizontale Drehachse (43) verschwenkbar ist. An gegenüberliegenden Längsseiten (41a,41b) des Supports (39) sind mindestens jeweils ein Haken (57a,57b) angeordnet, welche Haken (57a,57b) zur Halterung der Schaltafel (37) an den Längsseiten (41a,41b) der Schaltafel (37) angreifen.

## Beschreibung

### Gebiet der Erfindung

Die Erfindung betrifft eine Vorrichtung zum Säubern von Seitenkanten von Schaltafeln, Kanthölzern, H-Trägern u. ä. insbesondere von anhaftenden Betonresten gemäss Oberbegriff des Anspruchs 1 und ein Verfahren zum Herstellen selbiger gemäss Oberbegriff des Anspruchs 9, sowie eine Vorrichtung zum Halten und Verschwenken von einer von Betonresten zu reinigenden Schaltafel, Kanthölzern, H-Trägern u. ä. gemäss Oberbegriff des Anspruchs 10 und ein Set bestehend aus den beiden obenstehenden Vorrichtungen.

### Stand der Technik

Schaltafeln, Kanthölzer und H-Träger werden in der Baubranche standardmässig in der Verschalungstechnik eingesetzt. Dabei kommt es zwangsläufig zu Verschmutzungen der jeweiligen Seitenkanten mit Beton. Da diese Verschmutzungen am Stoss zwischen zwei benachbarten Schaltafeln zu Undichtigkeiten führen und auch die vollflächige Auflage von Kanthölzern und H-Trägern beispielsweise an angrenzenden Schaltafeln verhindern, müssen derartige Betonverschmutzungen vollständig entfernt werden.

Die Handwerker behelfen sich auf den Baustellen mit Schabern, welche ohnedies auf der Baustelle vorhanden sind. Mit der Klinge des Schabers werden die Betonverschmutzungen per Hand abgeschabt. Diese Arbeit ist zeitintensiv und auch aus sicherheitstechnischen Gründen riskant, da der Handwerker mit der Spachtel leicht von der zu reinigenden Seitenkante ungewollt abrutschen kann und demzufolge das Risiko eines Arbeitsunfalls hoch ist. Auch müssen die ausgehärteten Betonverschmutzungen des Öfteren mehrmals mit dem Schaber bearbeitet werden, um die Seitenkanten vollständig zu reinigen. Ferner werden die zu reinigenden Seitenkanten durch den Einsatz der Schaber des Öfteren beschädigt. In diese Beschädigungen dringt flüssiger Beton ein, wodurch das ausgegossene Betonelement an der Stelle der Beschädigung eine Erhebung aufweist. Solche Erhebungen müssen nach dem Ausschalen mühsam entfernt werden.

Die US 7,182,554 zeigt eine Raspel zur Glättung von rauen Kanten einer Gipskartonplatte. An der Raspel ist an ihrer Unterseite eine Ausnehmung vorgesehen. Die Ausnehmung ist von zwei sich in Längsrichtung der Raspel erstreckenden Seitenwänden und einer Grundfläche begrenzt. Eine ebenfalls sich in Längsrichtung erstreckende Trennwand unterteilt die Ausnehmung in einen ersten und zweiten Raspelbereich.

Im ersten Bereich der Raspel ist eine Mehrzahl von Schneideklingen hintereinander angeordnet. Die Schneideklingen erstrecken sich über die gesamte Breite der ersten Ausnehmung. Die Schneidkanten der Klingen bilden jeweils die Hypotenuse eines rechtwinkeligen Dreiecks. Die Katheten des Dreiecks sind durch eine Seitenwand bzw. die Grundfläche der Ausnehmung gebildet. Die Schneidkante schliesst demnach einen Winkel mit der Seitenwand bzw. der Grundfläche ein, welcher jedenfalls von 90 Grad verschieden ist und bevorzugt 45 Grad beträgt. Durch die Schneidkanten wird beim Verschieben der Raspel entlang der Kante einer Gipskartonplatte diese Kante abgeschrägt. Die Klingen und die Raspel sind für das Abtragen von relativ weichem Gips ausgelegt und sind folglich für das Entfernen von Betonresten nicht anwendbar.

Zur Herstellung und Glättung von rechtwinkeligen Kanten bei einer Gipskartonplatte ist der zweite Bereich der Raspel vorgesehen. Zu diesem Zweck ist die Grundfläche im zweiten Bereich mit einer Mehrzahl von scharfkantigen, zufällig angeordneten Erhebungen ausgestattet. Ein Vorteil dieser Raspel ist, dass deren Benutzung relativ sicher ist und Gips sowohl schräg als auch rechtwinkelig abtragbar ist. Nachteilig ist hingegen, dass der erste und zweite Bereich asymmetrisch gegenüber der Symmetrieebene der Raspel angeordnet sind. Wird beim Bearbeiten der Gipsplattenkanten ein erhöhter Druck auf die Raspel aufgebracht, so verkippt diese unweigerlich nach einer Seite und verkantet zumindest, oder rutscht von der Gipsplatte völlig ab. Für die Reinigung von Schaltafelkanten, bei der hohe Anpressdrücke unabdingbar sind, um ausgehärtete Betonreste abzuschaben, ist diese Raspel daher ungeeignet. Ferner ist die Raspel zur Säuberung von Schaltafeln nicht verwendbar, da die ausgehärteten Betonreste viel härter als Gips sind und zu einer Zerstörung der Schneidkanten bzw. Erhebungen führen.

Die US 5,823,719 zeigt ebenfalls eine Raspel zur Glättung von Kanten von Gipskartonplatten. An der Unterseite der Raspel ist eine Nut vorgesehen, welche der Aufnahme der zu glättenden Kante der Gipskartonplatte dient. Die Nut ist von zwei parallelen Verschiebeführungen und dem Boden der Raspel begrenzt. An den Übergängen von den Verschiebeführungen zu der Bodenplatte sind zwei sich in Längsrichtung der Raspel erstreckende Schlitze vorgesehen. Die Schlitze dienen der Aufnahme eines Raspelblatts. Das Raspelblatt dient der Abtragung des Gipsmaterials und ist, nachdem es seine abtragende Wirkung verloren hat, rasch gegen ein neues Raspelblatt austauschbar.

Auch aus der US 5,997,221 ist eine Raspel zum Glätten von Kanten einer Gipskartonplatte bekannt. Die gipsabtragende Wirkung wird bei dieser Raspel durch Metallstreifen erzielt, welche wabenförmig an der Innenseite eines U-Profils angeordnet sind.

### Aufgabe der Erfindung

Aufgabe der vorliegenden Erfindung ist es daher, eine Vorrichtung zu schaffen, welche die oben angeführten Nachteile nicht aufweist. Insbesondere soll eine Vorrichtung vorgeschlagen werden, mit welcher es ermöglicht ist, Betonverkrustungen rasch, vollständig und sicher von Seitenkanten von Verschalungsteilen zu entfernen, ohne dass die Seitenkanten durch die Säuberung beschädigt werden. Ein weiteres Ziel ist es, die Zugänglichkeit zu den Seitenkanten der oftmals schweren und verschmutzten Schaltafeln zu vereinfachen.

### Beschreibung

Erfindungsgemäss wird die Aufgabe bei einer Vorrichtung zum Säubern von Seitenkanten von Schaltafeln, Kanthölzern, H-Trägern u. ä. insbesondere von anhaftenden Betonresten gemäss Oberbegriff des Anspruchs 1 dadurch gelöst, dass zwischen den zwei Seitenteilen eine Mehrzahl von Schneidkanten aufweisenden Zähnen hintereinander angeordnet ist, welche Schneidkanten im wesentlichen orthogonal zu den Flachseiten der zwei Seitenteile orientiert sind. Die erfindungsgemässe Vorrichtung hat den Vorteil, dass die Mehrzahl von hintereinander angeordneten Zähnen zuverlässig z. B. Schaltafelseitenkanten in einem Arbeitsgang von anhaftenden Betonresten befreien. Durch die orthogonale Ausrichtung der Schneidkanten zu den Flachseiten der Seitenteile wirkt die Kraft von den Zähnen auf die gesamte Breite der Seitenkanten der Schaltafeln gleichmässig und direkt. Sollte der erste Zahn die Betonreste nicht vollständig entfernen, so werden die Betonreste von den nachfolgenden Zähnen entfernt. Damit die Zähne relativ zu der zu säubernden Seitenkante zuverlässig geführt sind und demzufolge ein Verkanten der Zähne ausgeschlossen ist, überragen die Seitenteile die Zähne erfindungsgemäss um eine bestimmte Distanz.

Zweckmässigerweise sind das Mittelteil und die zwei Seitenteile durch ein U-Profil mit einem Mittelteil und zwei Seitenteilen gebildet. U-Profile sind in verschiedensten Abmessungen am Markt kostengünstig erhältlich. Durch Wahl einer entsprechenden Wandstärke des U-Profils kann das Gewicht der Vorrichtung ohne Aufwand erhöht werden. Ein erhöhtes Gewicht ist für eine gleichmässige und ermüdungsfrei Säuberung der Schalttafelseitenkanten von Bedeutung.

Als vorteilhaft erweist es sich, wenn jeder Zahn wenigstens an seinen Seitenkanten, welche zu den Seitenteilen orientiert sind, Fortsätze aufweist. Diese Fortsätze wirken formschlüssig mit Aufnahmeöffnungen in den Seitenteilen zusammen. Durch diese Fixierung der Zähne an den Seitenteilen, ist ein Ausbrechen der Zähne auch bei der Entfernung von harten Betonrückständen zuverlässig verhindert. Denkbar ist es auch, dass jeder Zahn zusätzlich an seiner Breitseite, welche dem Mittelteil zugewandt ist, einen weiteren Fortsatz aufweist, welcher mit einer Aufnahmeöffnung am Mittelteil zusammenwirkt. Dadurch lässt sich die Fixierung jedes Zahnes noch weiter verbessern. Ferner sind die Fortsätze mit den Seitenteilen bzw. dem Mittelteil bevorzugt verschweisst, um ein Ausbrechen der Zähne gänzlich zu verunmöglichen.

Dadurch, dass an der Aussenseite des Mittelteils ein rohrförmiger Griff vorgesehen ist, bietet die Vorrichtung vorteilhaft eine Angriffsfläche für beide Hände eines Benutzers.

Vorteilhaft schliessen die Zähne mit dem Mittelteil einen Winkel von 30 bis 90 Grad, bevorzugt von 45 bis 90 und ganz besonders bevorzugt von ca. 90 Grad ein. In einem Anstellwinkel von 90 Grad ist der Druck der Zähne auf die zu entfernenden Verunreinigungen am grössten, obwohl auch jeder andere Anstellwinkel denkbar wäre. Ein weiterer Vorteil liegt darin, dass die Vorrichtung bei einem Anstellwinkel der Zähne von ca. 90 Grad an keine bevorzugte Verschieberichtung gebunden ist. Die Vorrichtung ist daher sehr einfach zu bedienen.

Dadurch, dass die lichte Weite des U-Profils die Breite der zu säubernden Seitenkante um 2 bis 6 mm und bevorzugt um 3 bis 4 mm übersteigt, ist sichergestellt, dass ein Verkanten der Zähne durch Schrägstellung der Vorrichtung relativ zur Seitenkante verhindert ist. Der geringe Abstand der Seitenteile zur Seitenkante gewährleistet, dass die Vorrichtung immer parallel zur Seitenkante geführt ist und die Kanten nicht beschädigt werden.

Mit Vorteil überragen die Seitenteile des U-Profils die Länge der Zähne um mindestens 10 mm, bevorzugt um 30 mm und ganz besonders bevorzugt um 40 mm. Der Überstand der Seitenteile gegenüber der Länge der Zähne sichert eine ausreichende Führung der Seitenteile an den an die zu säubernde Seitenkante angrenzenden Seitenflächen. Ein Benutzer kann sich daher bei der Säuberung auf die gleichmässige Schubbewegung der Vorrichtung konzentrieren und muss nicht zusätzlich die optimale Ausrichtung der Vorrichtung beachten.

Um auch ein Säubern der an die Seitenkante angrenzenden Flächen zu erlauben, sind vorteilhaft in kurzem Abstand zu mindestens einer Stirnseite des U-Profils an der Innenseite der Seitenteile jeweils zumindest zwei sich gegenüberliegende Schaber angeordnet, welche Schaber orthogonal zur Längserstreckung des Mittelteils orientiert sind. Denkbar wäre auch eine Anordnung von mehreren hintereinander vorgesehenen Schabern, jedoch ist dies meist nicht notwendig, da an den Seitenflächen weniger Betonreste vorhanden sind.

Die Erfindung betrifft auch ein Verfahren zur Herstellung einer Vorrichtung zum Reinigen von Seitenkanten von Schaltafeln, Kanthölzern, H-Trägern u. ä. Erfindungsgemäss ist die Vorrichtung **dadurch gekennzeichnet, dass** an den Längseiten der Seitenteile eines U-Profils, welche dem Mittelteil zugewandt sind, eine Mehrzahl von Schlitze eingearbeitet werden, deren Form dem Querschnitt der Zähne entspricht, welche mit dem U-Profil verbunden werden, die Zähne in die entsprechenden Schlitze eingesetzt werden, die Zähne mit den Seitenteilen an deren Aussenseiten verschweisst werden und die Schweissnähte vorzugsweise verschliffen werden. Das erfindungsgemässe Verfahren hat den Vorteil, dass alle Zähne den gleichen Anstellwinkel besitzen, die Zähne sehr stabil mit dem U-Profil verbunden sind und die Schweissnähte ohne Aufwand an den Aussenseiten der Seitenteile des U-Profils anbringbar sind. Denkbar wäre es auch, dass die Zähne in einem Stück mit dem U-Profil gegossen sind oder mit den Seitenteilen verklebt sind.

Ein weiterer Aspekt der Erfindung betrifft eine Vorrichtung zum Halten und Verschwenken von einer insbesondere von Betonresten zu reinigenden Schaltafel, Kanthölzern, H-Trägern u. ä., mit einem Gestell und einem an dem Gestell schwenkbar angeordneten Support zur Halterung einer Schaltafel, welcher Support zwei gegenüberliegende Längsseiten aufweist. Ferner sind an dem Support Mitteln zur Halterung der Schaltafel, welche an den zwei Längsseiten des Supports vorgesehen sind, angeordnet. Der Benutzer hat daher beide Hände frei, um die Schaltafel auszunageln und eine Längskante einer Schaltafel zu säubern. Weitere Vorteile der Erfindung sind, dass eine Schaltafel über die Haken rasch lösbar mit der Haltevorrichtung verbunden ist und die weitere Längskante der Schaltafel dadurch zugänglich ist, dass der Support mitsamt der Schaltafel um vorzugsweise 180 Grad verschwenkbar ist. Dadurch sind beide zu reinigende Längskanten der Schaltafeln gut zugänglich, insbesondere, wenn die Vorrichtung gemäss Anspruch 1 bis 8 verwendet wird, um die Seitenkanten zu reinigen.

Zweckmässigerweise sind die Mittel Haken, welche im Wesentlichen rechtwinkelig zu den Längskanten des Supports bzw. parallel zu den Breitseiten der Schaltafel verschwenkbar zwischen einer Offenstellung und einer Haltestellung an dem Support angeordnet sind. Eine in der Vorrichtung aufgenommene Schaltafel ist rasch an der Vorrichtung fixiert und ebenso rasch wieder freigegeben. Die Verschwenkbarkeit der Haken erweist sich auch während der Säuberung der Seitenkanten als Vorteil, da diese kurzzeitig geöffnet werden können, um den darunterliegenden Teil der Seitenkante zur Säuberung freizugeben.

Dadurch, dass die Haken wenigstens in der Haltestellung arretierbar sind, ist ein ungewolltes Öffnen der Haken vorteilhaft verunmöglicht.

Damit zwischen den einzelnen Verschwenkposition des Supports rasch gewechselt werden kann und der Support in den einzelnen Position zuverlässig gehalten ist, ist vorteilhaft ein Drehgelenk vorgesehen. Das Drehgelenk verbindet den Support drehbar mit Stehern der Konsole und ist wenigstens in einer horizontalen Position des Supports, welche sich zwischen den beiden vertikalen Positionen befindet, arretierbar.

Zweckmässigerweise besteht ein Set aus einer Vorrichtung zum Säubern von Seitenkanten von Schaltafeln, Kanthölzern, H-Trägern u. ä. insbesondere von anhaftenden Betonresten nach einem der Ansprüche 1 bis 8 und einer Vorrichtung zum Halten und Verschwenken einer Schaltafel Kanthölzern, H-Trägern u. ä. nach einem der Ansprüche 10 bis 14. Die beiden erfindungsgemässen Vorrichtungen erfüllen eine einzige allgemeine erfinderische Idee, da die Vorrichtungen nur in Kombination miteinander ihre optimale technische Wirkung erfüllen können.

Nachfolgend wird die Erfindung unter Bezugnahme auf die Figuren in schematischer Darstellung näher im Detail beschrieben. Es zeigt:
- Figur 1:: eine Frontansicht einer Vorrichtung, welche der Säuberung von Kant- holz dient;
- Figur 2:: eine Schnittdarstellung der Vorrichtung aus Figur 1 in Blickrichtung A;
- Figur 3:: eine Frontansicht einer Vorrichtung, welche der Säuberung von Schal- tafeln dient;
- Figur 4:: eine Schnittdarstellung der Vorrichtung aus Figur 3 in Blickrichtung B;
- Figur 5: eine Vorderansicht eines Zahnes;
- Figur 6:: eine Seitenansicht einer ersten Ausführungsform einer Vorrichtung zum Halten und Verschwenken von Schaltafeln;
- Figur 7:: Die Vorrichtung aus Figur 6 in einer Frontansicht;
- Figur 8:: ein Drehgelenk in einer Detailansicht;
- Figur 9:: eine perspektivische Ansicht einer zweiten Ausführungsform einer Vorrichtung zum Halten und Verschwenken von Schaltafeln;
- Figur 10:: eine perspektivische Ansicht des Ablagegestells der Vorrichtung aus Figur 11;
- Figur 11:: eine perspektivische Detailansicht eines Drehgelenks zum Ver- schwenken des Ablagegestells;
- Figur 12:: eine Detailansicht eines Hakens zur Halterung einer Schaltafel und
- Figur 13:: eine Detailansicht einer Hakenbefestigung zum verschwenkbaren Festlegen des Hakens aus Figur 12 an dem Ablagegestell aus Figur 10.

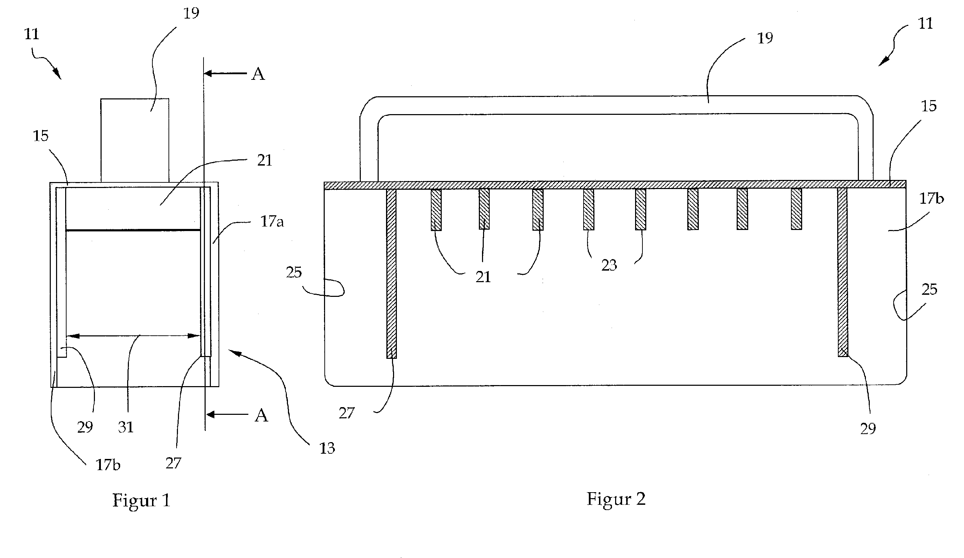

Die Figuren 1 und 2 zeigen eine Vorrichtung, die dem Säubern von Kanthölzern insbesondere von anhaftenden und ausgehärteten Betonresten dient und gesamthaft mit dem Bezugszeichen 11 bezeichnet ist. Die Vorrichtung 11 besteht aus einem U-Profil 13 mit einem Mittelteil 15 und zwei sich gegenüberliegenden Seitenteilen 17a und 17b. An der Aussenseite des Mittelteils 15 ist ein Griff 19 zur Führung der Vorrichtung 11 vorgesehen. Innerhalb des U-Profils 13 ist an dem Mittelteil 15 eine Mehrzahl von Zähnen 21 hintereinander angeordnet. Die Schneidkanten 23 der Zähne 21 sind orthogonal zu den Flachseiten der Seitenteile 17a,17b orientiert. Versuche haben ergeben, dass sich Betonreste mit der Vorrichtung 11 am effizientesten reinigen lassen, wenn die Zähne mit dem Mittelteil einen Winkel von etwa 90 Grad einschliessen. Dies liegt daran, dass die Entfernung der Betonreste weniger schneidender Wirkung der Zähne als einer möglichst direkten Übertragung der Schubkraft auf die Betonreste bedarf. Von Vorteil ist auch, dass bei einem Winkel von 90 Grad die Kanten der Kanthölzer während der Säuberung nicht verletzt werden und die Vorrichtung 11 unabhängig von der Verschieberichtung einsetzbar ist. Die Zähne 21 können mit dem Mittelteil 15 auch einen anderen Winkel, beispielsweise von 45 Grad einschliessen. Die freistehenden Schneidkanten 23 der Zähne 21 sind dann derartig abgeflacht, dass die Schneidkanten 23 parallel zur Längsrichtung des Mittelteils 15 orientiert sind. Da die Betonreste eine grosse Härte besitzen, versteht es sich, dass die Zähne 21 oder wenigstens ihre Schneidkanten 23 aus einem härteren Material wie die Betonreste, beispielsweise gehärtetem Stahl, gefertigt sein müssen.

Die Breitseiten 25 der Seitenteile 17a, 17b überragen die Zähne um ein Mehrfaches der Länge der Zähne, bevorzugt beträgt die Abmessung der Breitseiten 25 das Drei- bis Sechsfache der Länge der Zähne. Ist die Vorrichtung 11 auf eine Seitenkante eines Kantholzes aufgesetzt, um diese zu säubern, ist die Vorrichtung 11 durch die Seitenteile 17a, 17b während ihrer Bewegung entlang des Kantholzes zuverlässig geführt. Dadurch ist ein Verkanten der Zähne 21 auf der zu säubernden Seitenkante vermieden.

In kurzem Abstand zu den Stirnseiten 25 sind an den einander zugewandten Flächen der Seitenteile 17a, 17b Schaber 27 bzw. 29 vorgesehen. Die Schaber 27 bzw. 29 sind parallel zu den Stirnseiten 25 orientiert. Die lichte Weite 31 zwischen dem Schaber 27 und 29 ist derartig bemasst, dass sie die Breite einer zu reinigenden Seitenkante geringfügig übersteigt. Dadurch werden die Flächen eines Kantholzes, welche die zu säubernde Seitenkante begrenzen, automatisch während des Säuberns der Seitenkante mit Hilfe der Schaber 27, 29 von Betonresten befreit. Da die gängigsten Kanthölzer und H-Profile eine Seitenkantenbreite von 80 x 120 mm besitzen, ist die lichte Weite 31 an dieses Mass angepasst.

Die Zähne 21 können mit dem U-Profil 13 dadurch verbunden sein, dass in den Seitenteilen 17a, 17b Schlitze ausgeschnitten sind, welche dem Querschnitt der Zähne 21 entsprechen. Die Zähne 21 sind in den Schlitzen aufgenommen und dadurch mit den Seitenteilen 17a, 17b verbunden, dass die Zähne 21 mit den Seitenteilen 17a, 17b an deren einander abgewandten Seiten verschweisst sind. Die Schaber 27, 29 sind ebenfalls an den Seitenteilen 17a, 17b angeschweisst.

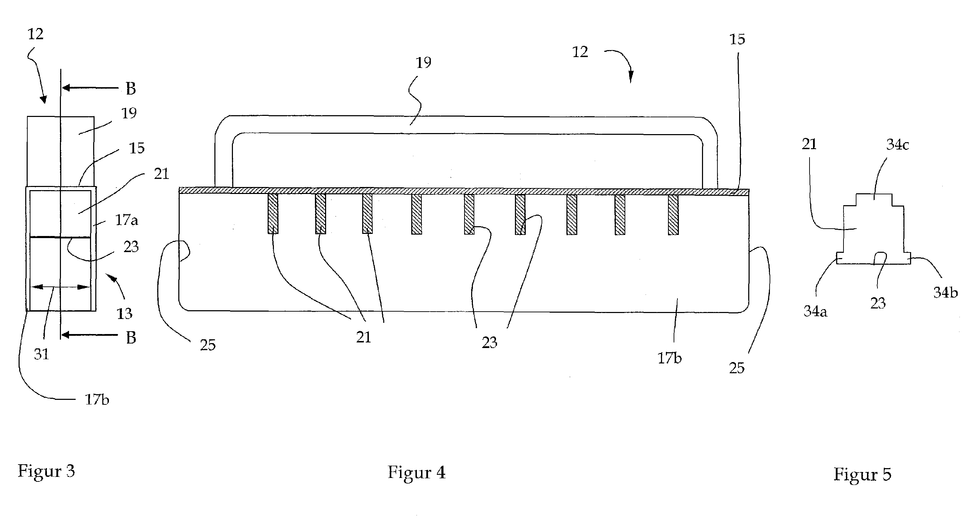

Die Figuren 3 und 4 zeigen eine Vorrichtung 12 zur Säuberung der Seitenkanten von Schaltafeln. Grundsätzlich unterscheidet sich dieses Ausführungsbeispiel von der Vorrichtung 11 lediglich durch eine Bemassung, welche an die Dimensionen der am Bau am weitest verbreiteten Schaltafeln angepasst ist. Bei der Vorrichtung 12 kann auf die Schaber 27, 29 verzichtet werden, da die Seitenflächen, welche an die zu säubernden Seitenkanten anschliessen, selten mit Betonresten verunreinigt sind.

In Figur 5 ist ein Zahn 21 gezeigt, welcher eine weitere Möglichkeit einer formschlüssigen Befestigung des Zahnes 21 in dem U-Profil 13 ermöglicht. Zu diesem Zweck besitzt der Zahn 21 an seinen Seitenkanten, welche in Kontakt mit dem U-Profil 13 stehen, Fortsätze 34a,34b,34c. Diese Fortsätze besitzen eine Höhe, welche im Wesentlichen der Wandstärke des U-Profils entspricht. Die Fortsätze sind an dem U-Profil 13 in Aufnahmeöffnungen eingesetzt, welche im wesentlichen die Negativform der Fortsätze 34a,34b,34c aufweisen. Durch diesen Formschluss sind die Zähne 21 fest mit dem U-profil verbunden. Auch harte Verkrustungen oder Verschmutzungen sind daher nicht in der Lage die Zähne aus dem U-Profil auszubrechen, wenn diese mit den Zähnen in Kontakt treten. Zusätzlich können die Fortsätze 34a,34b,34c noch mit dem U-Profil 13 verschweisst sein, um die Verbindung zwischen Zähnen 21 und U-Profil 13 noch weiter zu verbessern. Die Aufnahmeöffnungen können kleiner ausgeführt sein als weiter oben beschriebene Schlitze, was eine kostengünstigere Herstellung der Vorrichtung 11 bzw. 12 bewirkt. Zähne 21 mit solchen Fortsätzen 34a,34b,34c sind jedoch nicht in ein U-Profil einsetzbar. Vielmehr müssen die Seitenteile 17a,17b mit dem Mittelteil 15 verbunden, bevorzugt verschweisst werden, nachdem die Fortsätze in die Aufnahmeöffnungen eingesteckt wurden.

Die Vorrichtungen 11 bzw. 12 funktionieren wie folgt: Das U-Profil 13 wird auf ein Ende der Seitenkante eines Kantholzes, eines H-Profils, einer Schaltafel o. ä. aufgesetzt. Die Verschieberichtung der Vorrichtungen 11 bzw. 12 spielen keine Rolle, da die Schneidkanten 23 keine bevorzugte Wirkrichtung besitzen. Dadurch, dass die Seitenteile 17a, 17 b entlang der an die Seitenkante benachbarten Flächen gleiten, ist ein Verkanten der Zähne 21 auf der zu säubernden Seitenkante vermieden. Dies ist dadurch begründet, dass sich die Schneidkanten 23 der Zähne 21 immer in einer konstanten Auflageposition zur zu säubernden Seitenfläche befinden.

Dadurch, dass die Vorrichtung 11 bzw. 12 aus Edelstahl gefertigt ist und das U-Profil vorzugsweise eine Wandstärke von 2 mm besitzt, weist die Vorrichtung 11 bzw. 12 ein relativ hohes Gewicht auf. Dies ist während des Säuberungsprozesses von Vorteil, da der Benutzer nur wenig manuellen Druck auf die Vorrichtung 11 bzw. 12 aufbringen muss, um die entsprechenden Seitenkanten von Betonresten zu befreien. Die Vorrichtung 11 bzw. 12 wird ähnlich einer Handhobel bedient. Sollte die zu säubernde Seitenkante nach einem ersten Reinigungsdurchgang noch Betonreste aufweisen, so kann die Vorrichtung 11 bzw. 12 auf der Seitenkante neu aufgesetzt werden und die Säuberung wiederholt werden.

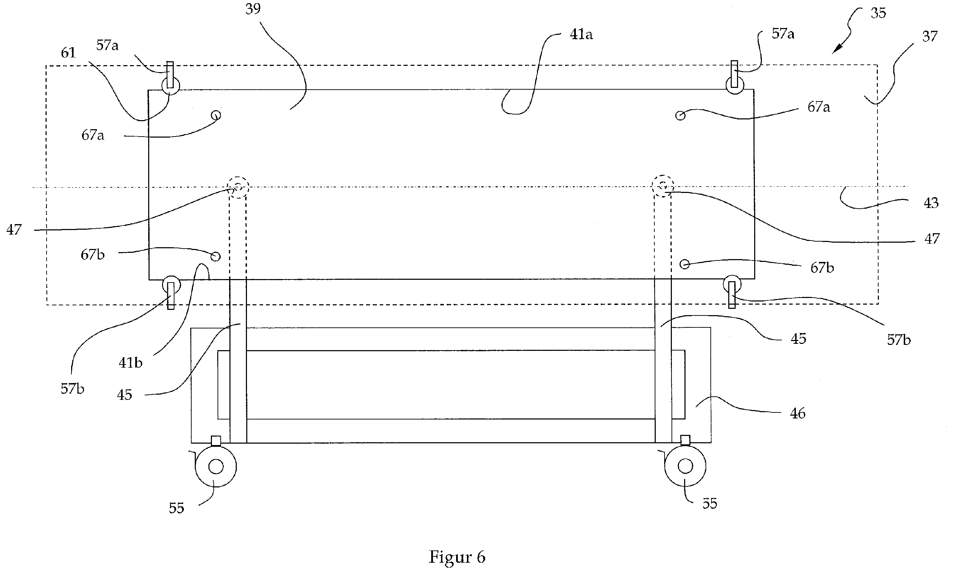

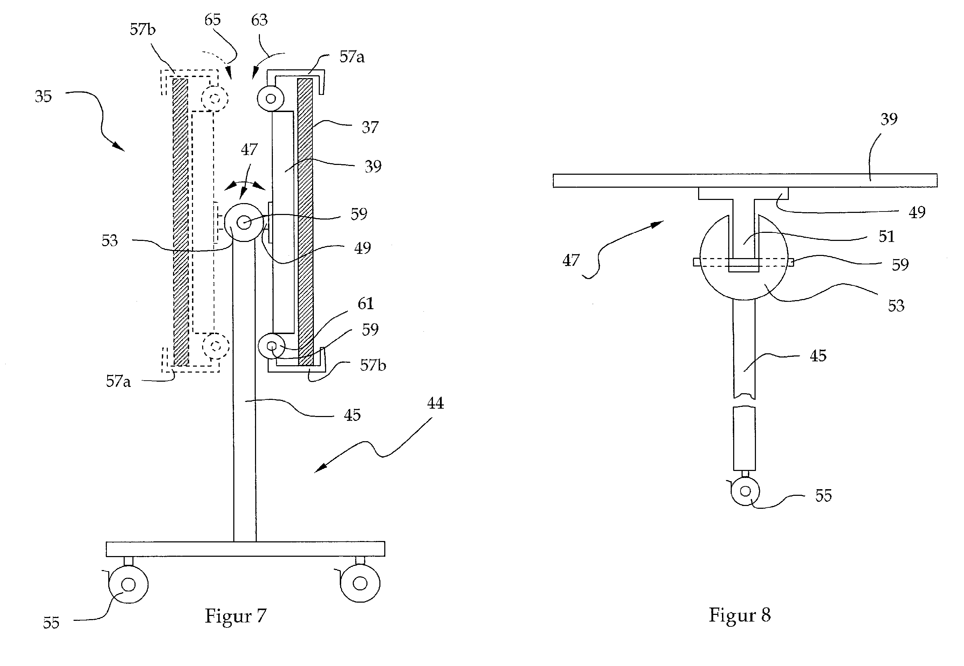

Ein weiterer Aspekt der Erfindung betrifft eine Vorrichtung 35 zum Halten und Verschwenken von einer Schaltafel 37 (Figur 6 und 7). Die Vorrichtung besitzt einen vorzugsweise rechteckigen Support 39 mit einer ersten und zweiten Längsseite 41a,41b und einer Drehachse 43.

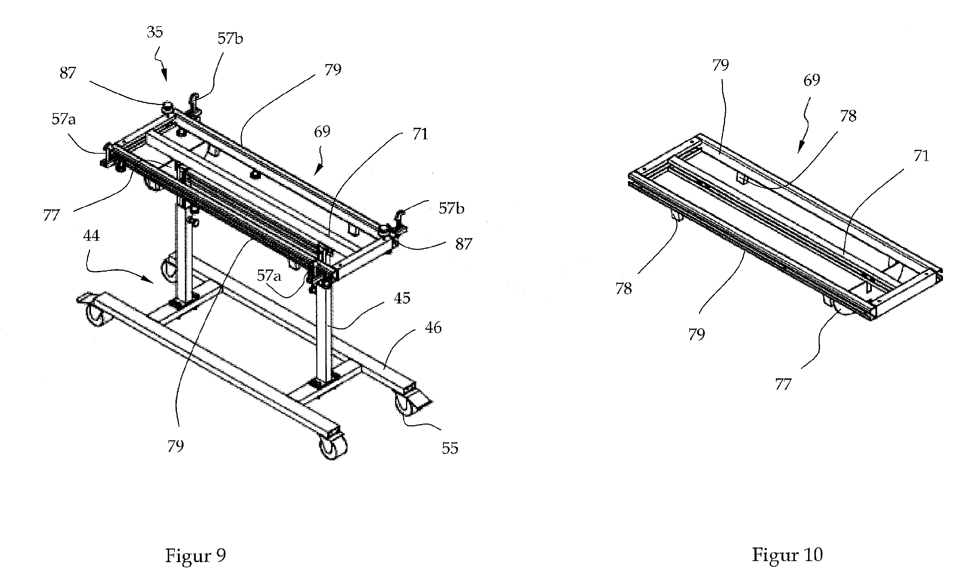

Der Support 39 ist an zwei Stehern 45 eines Gestells 44 derartig angeordnet, dass er aus einer ersten Position um vorzugsweise 180 Grad um die Drehachse 43 in eine zweite Position (in Figur 7 gestrichelt dargestellt) verschwenkbar ist. Damit diese Verdrehung durchführbar ist, ist der Support 39 mit zwei Drehgelenken 47 an den Stehern 45 angeordnet. Das Gestell 44 besitzt zusätzlich eine Konsole 46 an der die Steher 45 gehalten sind. Das Drehgelenk 47 besteht aus einem Befestigungsflansch 49, welcher an dem Support 39 mittig zwischen Längseiten 41a,41b angebracht ist. Auf der Verbindungsgerade zwischen den beiden Befestigungsflansche 49 ist die Drehachse 43 gebildet. Der Befestigungsflansch 49 ragt mit einem Fortsatz 51 in einen Drehkopf 53. Am Ende des Fortsatzes 51, welcher in den Drehkopf 53 ragt, ist ein Drehbolzen 59 vorgesehen. Der Drehbolzen 59 ist in dem Drehkopf 53 versschwenkbar aufgenommen (Figur 8). Der Support 39 ist in horizontaler Position an dem Drehkopf arretierbar. In den vertikalen Stellungen muss der Support 39 nicht arretierbar sein, da er alleine durch sein Gewicht in diesen Stellungen gehalten ist. Damit die Vorrichtung 35 verschiebbar ausgeführt ist, ist die Vorrichtung 35 mit vier feststellbaren Rollen 55 ausgestattet. Die Steher 45 sind in ihrer Höhe verstellbar und sind auf eine optimale Arbeitshöhe einstellbar (Nur in Figur 9 dargestellt).

An der Vorrichtung 35 sind zwei Haken 57a und zwei Haken 57b verschwenkbar angeordnet. Die Haken 57a sind an der einen Längsseite 41a des Supports 39 angeordnet und die Haken 57b sind den Haken 57a gegenüberliegend auf der zweiten Längsseite 41b des Supports 39 angeordnet. Die Haken 57a und 57b sind durch Drehbolzen 59 in Drehköpfen 61 aufgenommen. Die Drehköpfe 61 sind am Support 39 drehfest angeordnet. Die Anordnung der Haken 57a an den jeweiligen Drehköpfen 61 erlaubt eine Verdrehung der Haken 57a in Drehrichtung 63, welche weg von der Schaltafel 37 orientiert ist, aus einer Haltestellung in eine Offenstellung. Befinden sich die Haken 57a in der Offenstellung, ist die Schaltafel 37 auf die Haken 57b abstellbar. Die Haken 57a sind in der Verschlussstellung arretierbar. Die Haken 57b sind ebenfalls zwischen einer Offenstellung und einer arretierbaren Verschlussstellung verschwenkbar. Zur Aufnahme von kurzen Schaltafeln, deren Länge kürzer als die Längsseite 41 des Supports 39 ist, ist es denkbar, dass der Abstand der beiden Haken 57a verkürzbar ist. Ein Verkürzen des Abstands der beiden Haken 57a ist beispielsweise durch ein erstes und zweites Profil erreichbar, wobei ein Haken 57a an dem ersten Profil und ein Haken 57a an dem zweiten Profil angeordnet ist. Das erste Profil lässt sich in dem zweiten Profil verschieben oder vice versa.

Die Verschwenkung der Haken 57b kommt in der zweiten um 180 Grad verschwenkten Position des Supports 39 zum Einsatz, jedoch in Drehrichtung 65, um in die Offenstellung zu gelangen.

Damit die Vorrichtung auch Schalbretter mit einer geringen Breite aufnehmen kann, sind in kurzem Abstand zu den Längsseiten 41a,41b jeweils zwei Durchgangsöffnungen 67a bzw. 67b vorgesehen. Die Durchgangsöffnungen 67a,67b dienen der Aufnahme von nicht dargestellten Bolzen. Diese Bolzen wirken mit den Haken 57a bzw. 57b zusammen, um Schalbretter an dem Support 39 zu halten.

Die Vorrichtung 35 funktioniert wie folgt: In einem ersten Schritt werden die Steher 45 auf eine optimale Arbeitshöhe eingestellt. Anschliessend wird die Schaltafel 37 auf die Haken 57b gestellt. Dabei ist zu beachten, dass sich der Support in der ersten Position und die Haken 57a in der Offenstellung befinden. Befindet sich der Support 37 in der zweiten Position, so wird die Schaltafel 37 auf die Haken 57a gestellt und die Haken 57b müssen sich in der Offenstellung befinden. Nachdem die Haken 57a bzw. 57b in der Haltestellung arretiert wurden, wird die Vorrichtung 12 an ein Ende der über dem Drehgelenk 47 liegenden und zu säubernden Seitenkante der Schaltafel 37 angelegt und die Vorrichtung 12 wird in Verschieberichtung über die Seitenkante geführt. Dabei ist zu beachten, dass die Haken 57a bzw. 57b kurzfristig geöffnet werden, um das darunterliegende Teilstück der Seitenkante ebenfalls säubern zu können.

Nach Säuberung der ersten Längsseite und der Breitseiten der Schaltafel 37 wird die Schaltafel um die Drehachse 43 um vorzugsweise 180 Grad verschwenkt. Die zweite Längsseite der Schaltafel 37 wird in gleicher Weise wie die erste Längsseite mit Hilfe der Vorrichtung 12 gesäubert.

Nach Verschwenken der Haken 57a bzw. 57b in die Offenstellung wird die Schaltafel 37 aus der Vorrichtung 35 gehoben.

Falls die Oberflächen der Schaltafel 37 gesäubert werden müssen, erweist es sich als vorteilhaft, das Drehgelenk 47 in die 90 Grad Position zu Verschwenken. In der 90 Grad Position ist das Drehgelenk zu arretieren. In dieser Stellung sind die Oberflächen der Schaltafel 37 vorzugsweise horizontal ausgerichtet. Es ist auch denkbar, dass in dieser Stellung Profile, wie z. B. Kanthölzer, an dem Support 39 zur Säuberung ihrer Kanten befestigt sind. Auch ist es denkbar, dass der Support auch in weiteren Positionen, welche sich zwischen der ersten und der zweiten Position befinden, arretierbar ist. Dies kann sinnvoll sein, wenn zum Säubern der Schaltafel 27 eine Schrägstellung von Vorteil ist. Wenn die Oberfläche der Schaltafel 37 beispielsweise abzuwaschen ist, dann läuft das Waschwasser in einer Schrägstellung der Schaltafel rascher ab.

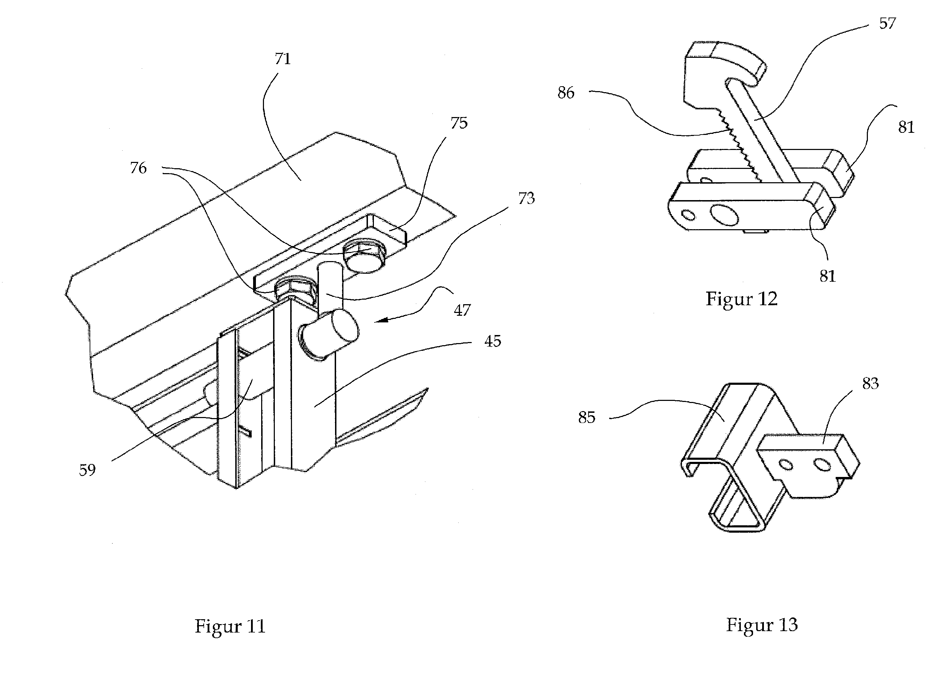

In der Figur 9 ist der Support 39 als ein Ablagegestell 69 ausgeführt. Dies ist aus einer Rahmenkonstruktion von C-Profilen hergestellt. Auch das mittige Profil 71 kann ein C-Profil sein. Das mittlere C-Profil 71 ist gemäss Figur 11 an den Stehern 45 durch das Drehgelenk 47 festgelegt. Der Drehbolzen 59 ist mit einem ersten Ende drehbar in dem Steher 45 aufgenommen. An einem zweiten Ende ist ein Verbindungsstab 73 vorgesehen, welcher mittels einer Platte 75, durch welche Schrauben 76 hindurchgeführt sind, an dem mittigen Profil 71 festlegbar ist. Zur Arretierung in der horizontalen Stellung ist an dem Ablagegestell 69 in kurzem Abstand zu einem der beiden Steher 45 wenigstens eine Arretierungsplatte 77 vorgesehen. An der Arretierungsplatte 77 ist eine Durchgangsöffnung vorgesehen, in welche ein Splint einsteckbar ist. Der Splint ragt ebenfalls durch eine Durchgangsöffnung in den Steher 45. Auch kann an der Arretierungsplatte eine Schraube vorgesehen sein, welche zur Fixierung des Ablagegestells 69 in ein Innengewinde an einem der Steher einschraubbar ist. Das Ablagegestell ist daher in einfacher Weise in seiner horizontalen Stellung arretierbar. In den vertikalen Stellungen stützt sich das Ablagegestell 69 mittels Stützprofilen 78 an den Stehern 45 ab und ist in diesen Stellungen durch sein Gewicht und das Gewicht der Schalplatte 37 gehalten.

Die Befestigung der Haken 57a,57b an den Längsprofilen 79 ist aus den Figuren 9, 12 und 13 ersichtlich. Die Haken 57 sind an ihren geraden Enden von Haltestegen 81 flankiert und fix mit diesen verbunden. Zwischen den Haltestegen 81 ist an deren freien Enden ein Befestigungselement 83 drehbar mit diesen verbunden. In ihrer Verschlussstellung, in welcher die Haken 57a,57b eine Schalplatte 37 halten, kann einer der Haltestege 81, beispielsweise mit einer Knebelschraube, mit dem Befestigungselement 83 verklemmt sein. Möglich ist es auch, einen durch eine Feder vorgespannten Splint an einem der Haltestege 81 festzulegen. Der Splint arretiert die Haken 57a,57b, indem er in eine Vertiefung des Befestigungselements 83 ragt. Ein Verschwenken bzw. Fixieren der Haken 57a,57b ist durch einfaches Ziehen und Loslassen des vorgespannten Splints ermöglicht. Das Befestigungselement 83 ist seinerseits am Steg eines kurzen C-Profils 85 fixiert. Das kurze C-Profil 85 ist derart bemasst, das es in eines der nach aussen offenen Längsprofile 79 einschiebbar ist. Zur verbesserten Halterung von Schaltafeln 37 besitzen die Haken 57 eine Riffelung 86. Die beschriebene Haltekonstruktion der Haken 57a,57b hat den Vorteil, dass einerseits eine Schaltafel 37 zuverlässig in der Vorrichtung 35 gehalten ist. In den beiden Vertikalstellungen des Ablagegestells 69 sind die oberen Haken 57a bzw. 57b andererseits jederzeit entlang der Längsseite einer Schaltafel 37 in dem Längsprofil 79 verschieblich und verhindern trotzdem das Kippen einer in der Vorrichtung 35 aufgenommenen Schaltafel 37. Dies ist insofern von Bedeutung, da die gesamte Längskante einer Schaltafel reinigbar ist, indem die Haken 57a,57b mit einem einzigen Handgriff zu öffnen sind und sodann entlang dem Längsprofil 79 nach links oder rechts verschiebbar sind.

Figur 9 zeigt auch eine Haltemöglichkeit, bei der Schalplatten haltbar sind, deren Breite kleiner als der Abstand der Haken 57a von den Haken 57b ist. Zu diesem Zweck sind in die Profile der Breitseiten des Ablagegestells 69 Halteschrauben 87 eingeschraubt.

### Legende:

- 11: Vorrichtung zum Säubern von Kanthölzern
- 12: Vorrichtung zum Säubern von Seitenkanten
- 13: U-Profil
- 15: Mittelteil des U-Profils
- 17a, 17b: Seitenteile des U-Profils
- 19: Griff
- 21: Zähne
- 23: Schneidkanten der Zähne
- 25: Breitseiten
- 27: Schaber
- 29: Schaber
- 31: Lichte Weite
- 34a,34b,34c: Fortsätze
- 35: Vorrichtung zum Halten und Verschwenken von Schaltafeln
- 37: Schaltafel
- 39: Support
- 41a,41b: Erste und zweite Längsseite des Supports
- 43: Drehachse
- 44: Gestell
- 45: Steher
- 46: Konsole
- 47: Drehgelenk
- 49: Befestigungsflansch
- 51: Fortsatz
- 53: Drehkopf
- 55: Rollen
- 57a, 57b: Haken
- 59: Drehbolzen
- 61: Drehkopf
- 63: Drehrichtung
- 65: Drehrichtung
- 67a, 67b: Durchgangsöffnungen
- 69: Ablagegestell
- 71: Mittiges Profil
- 73: Verbindungsstab
- 75: Platte
- 76: Schrauben
- 77: Arretierungsplatte
- 78: Stützprofile
- 79: Längsprofile
- 81: Haltestege
- 83: Befestigungselement
- 85: Kurzes C-Profil
- 86: Riffelung
- 87: Halteschrauben

## Patentansprüche

1. Vorrichtung (11) zum Säubern von Seitenkanten von Schaltafeln, Kanthölzern, H-Trägern u. ä. insbesondere von anhaftenden Betonresten, mit
- zwei parallelen Seitenteilen (17a,17b) und
- einem Mittelteil, welches die zwei Seitenteile (17a,17b) miteinander verbindet,
**dadurch gekennzeichnet,**
**dass** zwischen den zwei Seitenteilen (17a,17b) eine Mehrzahl von Schneidkanten (23) aufweisenden Zähnen (21) hintereinander angeordnet ist, welche Schneidkanten (23) im wesentlichen orthogonal zu den Flachseiten der zwei Seitenteile (17a,17b) orientiert sind und dass die zwei Seitenteile (17a,17) die Zähne (21) um eine bestimmte Distanz überragen.

2. Vorrichtung (11) nach Anspruch 1, **dadurch gekennzeichnet, dass** das Mittelteil (15) und die zwei Seitenteilen (17a,17b) durch ein U-Profil (13) gebildet sind.

3. Vorrichtung (11) nach Anspruch 1 oder 2, **dadurch gekennzeichnet, dass** jeder Zahn (21) wenigstens an seinen Seitenkanten, welche zu den Seitenteilen (17a,17b) orientiert sind, Fortsätze (34) aufweist, welche formschlüssig mit Aufnahmeöffnungen in den Seitenteilen (17a,17b) zusammenwirken.

4. Vorrichtung (11) nach einem der Ansprüche 1 bis 3, **dadurch gekennzeichnet, dass** an der Aussenseite des Mittelteils (15) ein rohrförmiger Griff (19) vorgesehen ist.

5. Vorrichtung (11) nach einem der Ansprüche 1 bis 4, **dadurch gekennzeichnet, dass** die Zähne (21) mit dem Mittelteil (15) einen Winkel von 30 bis 90 Grad, bevorzugt von 45 bis 90 und ganz besonders bevorzugt von ca. 90 Grad einschliessen.

6. Vorrichtung (11) nach Anspruch 2, **dadurch gekennzeichnet, dass** die lichte Weite (31) des U-Profils (13) die Breite der zu säubernden Seitenkante um 2 bis 6 mm und bevorzugt um 3 bis 4 mm übersteigt.

7. Vorrichtung (11) nach einem der Ansprüche 1 oder 6, **dadurch gekennzeichnet, dass** die Seitenteile (17a,17b) des U-Profils (13) die Länge der Zähne (21) um mindestens 10 mm, bevorzugt um 30 mm und ganz besonders bevorzugt um 40 mm überragen.

8. Vorrichtung (11) nach einem der Ansprüche 2 bis 7, **dadurch gekennzeichnet, dass** in kurzem Abstand zu mindestens einer Stirnseite (25) des U-Profils (31) an der Innenseite der Seitenteile (17a,17b) jeweils zumindest zwei sich gegenüberliegende Schaber (27) angeordnet sind, welche Schaber (27) im wesentlichen orthogonal zur Längserstreckung des Mittelteils (15) orientiert sind.

9. Verfahren zur Herstellung einer Vorrichtung (11) zum Reinigen von Seitenkanten von Schaltafeln, Kanthölzern, H-Trägern u. ä.,
**dadurch gekennzeichnet,**
**dass**
- an den Längseiten der Seitenteile (17a,17b) eines U-Profils (13), welche dem Mittelteil (15) zugewandt sind, eine Mehrzahl von Schlitzen eingearbeitet werden, deren Form im Wesentlichen dem Querschnitt der Zähne (21) entspricht, welche mit dem U-Profil (13) verbunden werden,
- die Zähne (21) in die entsprechenden Schlitze eingesetzt werden,
- die Zähne (21) mit den Seitenteilen (17a,17b) an deren Aussenseiten verschweisst werden und
- die Schweissnähte vorzugsweise verschliffen werden.

10. Vorrichtung (35) zum Halten und Verschwenken von einer insbesondere von Betonresten zu reinigenden Schaltafel (37), Kanthölzern, H-Trägern u. ä., mit
- einem Gestell (44)
- einem an dem Gestell (44) schwenkbar angeordneten Support (39) zur Halterung einer Schaltafel (37), welcher Support zwei gegenüberliegende Längsseiten aufweist, und
- Mitteln (57a,57b) zur Halterung der Schaltafel (37), welche an den zwei Längsseiten des Supports (39) vorgesehen sind.

11. Vorrichtung (35) nach Anspruch 10, **dadurch gekennzeichnet, dass** die Mittel Haken (57a,57b) sind, welche Haken (57a,57b) im Wesentlichen rechtwinkelig zu den Längsseiten des Supports (39) verschwenkbar zwischen einer Offenstellung und einer Haltestellung an dem Support (39) angeordnet sind.

12. Vorrichtung (35) nach Anspruch 11, **dadurch gekennzeichnet, dass** die Haken (57a,57b) wenigstens in der Haltestellung arretierbar sind.

13. Vorrichtung (35) nach einem der Ansprüche 10 bis 12, **dadurch gekennzeichnet, dass** an dem Support (39) mindestens ein Drehgelenk (47) angeordnet ist, das den Support (39) drehbar mit dem mindestens einen Steher (45) verbindet.

14. Vorrichtung (35) nach Anspruch 13, **dadurch gekennzeichnet, dass** das Drehgelenk (47) wenigstens in einer Position des Supports (39), welche sich zwischen der ersten und der zweiten Positionen befindet, arretierbar ist.

15. Set bestehend aus einer Vorrichtung (11) zum Säubern von Seitenkanten von Schaltafeln, Kanthölzern, H-Trägern u. ä. insbesondere von anhaftenden Betonresten nach einem der Ansprüche 1 bis 8 und einer Vorrichtung (35) zum Halten und Verschwenken einer Schaltafel Kanthölzern, H-Trägern u. ä. nach einem der Ansprüche 10 bis 14.
